# EUROPÄISCHE PATENTSCHRIFT

(11) **EP 1 443 814 B1**
(45) Veröffentlichungstag und Bekanntmachung des Hinweises auf die Patenterteilung: **02.09.2015**
(21) Anmeldenummer: 02787348.8
(22) Anmeldetag: 23.10.2002
(51) Int. Cl.: A01D 43/08

(54) **DURCHSATZMESSVORRICHTUNG IN EINER ERNTEMASCHINE**
THROUGHPUT MEASURING DEVICE IN A HARVESTER
DISPOSITIF DE MESURE DE DÉBIT D'UNE MOISSONNEUSE

(30) Priorität: 08.11.2001 DE 10154874
(43) Veröffentlichungstag der Anmeldung: 11.08.2004
(73) Patentinhaber: CNH Industrial Belgium nv, 8210 Zedelgem (BE)
(72) Erfinder: GOTTLÖBER, Dietrich, 01844 Neustadt (DE); KROMBHOLZ, Klaus, 78333 Stockach (DE); SCHWENKE, Tiemo, 85356 Freising (DE)
(74) Vertreter: Feldkamp, Rainer
(86) Internationale Anmeldenummer: PCT/DE2002/003988
(87) Internationale Veröffentlichungsnummer: WO 2003/039239

(56) Entgegenhaltungen:
- EP-A- 1 023 826
- US-A- 5 795 221
- US-A- 5 901 535
- US-B1- 6 272 819

## Beschreibung

Die Erfindung betrifft einen Feldhäcksler mit einer Durchsatzmeßvorrichtung und einer Verarbeitungseinrichtung, als eine wesentliche Voraussetzung zur lokalen Ertragsermittlung, mit den Merkmalen des Patentanspruchs 1.

Die lokale Ertragsermittlung ist heute die Einstiegstechnologie in die Teilschlagbewirtschaftung, die auch unter den Begriffen "Präziser Ackerbau" bzw. weitverbreitet auch als "Precision Farming" bekannt geworden ist. Jedoch auch ohne die Umsetzung des teilschlagspezifischen Pflanzenbauesgibt sie Aufschluß über Erntegutmengen und informiert über die Ertragsverteilung innerhalb der Schläge. Damit kann sie einen Ausgangspunkt für die gezielte Ursachenforschung in Problemzonen bilden oder eine Entscheidungshilfe bei der Flächenstillegung darstellen. Außerdem erleichtert sie die standortbezogene Beurteilung von Bewirtschaftungsmaßnahmen.

Die zwei wesentlichsten Komponenten eines Systems zur lokalen Ertragsermittlung sind die Durchsatzmeßvorrichtung in der Erntemaschine und die Ortungstechnik. Für die Erstellung von Ertragskarten sind zusätzliche Auswertungs- und Analyseprogramme notwendig. Die Durchsatzmeßvorrichtung erfaßt dabei kontinuierlich das Volumen bzw. die Masse des durch die Erntemaschine geförderten Erntegutes und andere Meßsysteme die Flächenleistung, woraus die Flächenerträge berechenbar sind. Gemeinsam mit den exakten Ortskoordinaten der Erntemaschine, die heute ausschließlich mit dem differentiellen Globalen Positionierungssystem DGPS bestimmt werden, und notwendigen Zusatzinformationen werden die lokalen Ertragswerte auf einem Datenträger in Form einer Chipkarte gespeichert. Auf dem Hofcomputer werden die Daten mit einer entsprechenden Software ausgewertet und zu Ertragskarten verarbeitet.

Derartige Durchsatzmeßvorrichtungen sind bereits in einer Vielzahl von Ausführungsvarianten in Feldhäckslern bekannt geworden. Eine davon ist in der DE 195 24 752 A1 beschrieben, wo die vertikale Bewegung einer Vorpreßwalze über ein Hebelgestänge auf die Drehachse eines Potentiometers übertragen wird, welches dem Hubweg entsprechende Hubsignale ausgibt Ein Induktivgeber erzeugt einen aus der Drehzahl einer Vorpreßwalze abgeleiteten Drehzahlsignalwert, welcher die Durchflußgeschwindigkeit des durch die Maschine hindurch fließenden Erntegutstromes repräsentiert. Die Signalwerte werden in einem Mikroprozessor kontinuierlich in einen absoluten Mengenmeßwert umgerechnet. Zusätzlich sollen die Signalwerte durch eine zusätzliche Belastungserfassung, beispielsweise eine Drehmomentenmessung an der Häckseltrommel, am Vorsatzgerät oder am Motor oder eine Schlupfmessung des Antriebsriemens der Häckseltrommel, berichtigt werden und in Bereichen definierter Grenzwerte, in denen sich eine Vorpreßwalze den oberen oder unteren Anschlägen nähert, damit als Korrekturwerte genutzt werden. Es hat sich jedoch herausgestellt, daß diese Korrekturen sehr ungenau sind. Das ist deshalb so, da die Belastungserfassung neben dem Durchsatz hochgradig von der Schärfe der Häckselmesser, dem Schneidspalt, der Art und der Feuchtigkeit des Erntegutes sowie von der Schmierung und vom Verschleiß der Lager der Häckseltrommel abhängig ist. Da diese Werte zur Zeit praktisch nicht erfaßt bzw. gemessen werden können, stehen sie damit auch zu einer ständigen Kalibrierung der Korrekturwerte nicht zur Verfügung. Darüber hinaus arbeitet diese Durchsatzmeßvorrichtung auch noch deshalb sehr ungenau, weil die durch Federn auf die Vorpreßwalze und dadurch auf den Erntegutstrom aufgebrachte und variabel einstellbare Anpreßkraft über den gesamten Hubweg der Vorpreßwalze völlig unberücksichtigt bleibt.

Eine weitere Durchsatzmeßvorrichtung in einem selbstfahrenden Feldhäcksler ist mit der DE 196 48 126 A1 bekannt geworden, mit der neben dem Durchsatz der Anteil der Feuchtigkeit im Erntegut festgestellt werden kann. Hierzu ist an zumindest einer Stelle des Weges des Erntegutes durch den Feldhäcksler am unteren Teil seines Auswurfbogens ein aus einer Sendeeinheit und einer Empfangseinheit bestehender Mikrowellensensor angeordnet Dieser Mikrowellensensor liefert Sensordaten, die von einer aus einem Mikroprozessor und einer geeigneten Software gebildeten Auswerteelektronik zu Daten, die das ermittelte Produkt aus Schichtdicke und Dichte im Förderkanal sowie die Feuchtigkeit repräsentieren, weiter verrechnet werden. Dabei arbeitet die Auswerteelektronik mit Gleichungssystemen, in denen die zu ermittelnden Parameter als Unbekannte enthalten sind, in die die übermittelten Sensordaten eingesetzt werden. Aus der Multiplikation der gemessenen Schichtdicke, der Dichte, der Förderkanalbreite und der Fördergeschwindigkeit erfolgt dann die Berechnung des Durchsatzes. Aus den gemessenen Sensordaten wird unter Einbeziehung eines Korrekturfaktors über eine weitere Multiplikation die Masse des geförderten Erntegutdurchsatzes bestimmt. Der Korrekturfaktor selbst kann aus einem Speicher, der gutspezifische Korrekturwerte abrufbar gespeichert hat, über eine Kalibrierung mit Gegenwiegen oder durch manuelle Eingabe, alles gegebenenfalls unter Nutzung des gemessenen Feuchtigkeitsgrades als Korrekturfaktor, vorgegeben werden.

Trotz der erweiterten Möglichkeiten zum Feststellen des Anteiles der Feuchtigkeit im Erntegut ist an dieser Durchsatzmeßvorrichtung zu bemängeln, daß auch deren Genauigkeit unzureichend ist, da das Prinzip der Vermessung des Erntegutstromes im Auswurfbogen und der Verrechnung mit den übrigen vorstehend genannten Daten mittels eines Mikrowellensensors Grenzen hat Des weiteren ist die bei dieser Durchsatzmeßvorrichtung vorgesehene Kalibrierung der gutspezifischen Korrekturwerte durch Gegenwiegen äußerst zeitaufwendig und zu ungenau, da das immer nur ein Durchschnittswert ist, der für den Durchsatz des augenblicklichen Erntegutstromes nicht repräsentativ ist. Ebenso verhält es sich hinsichtlich der Ungenauigkeit für manuell vom Bediener eingegebene Korrekturwerte, die ebenfalls nur Durchschnittswerte darstellen und darüber hinaus nur noch eine zusätzliche Fehlerquelle darstellen, wenn sich der Bediener bei der Eingabe irrt.

Weiterhin ist in der DE 199 03 471 C1 noch eine weitere Durchsatzmeßvorrichtung in einem Feldhäckslers beschrieben, die ein Paar das Erntegut führende und verdichtende Vorpreßwalzen aufweist, deren Abstand sich aufgrund des jeweiligen Erntegutdurchsatzes zwischen einer minimalen und einer maximalen Grenzlage verändert. Sie enthält eine Abstandsmeßvorrichtung, die den Abstand zwischen den Vorpreßwalze erfaßt und entsprechende Abstandssignale bereitstellt, und einen Geschwindigkeitsgeber, der Geschwindigkeitssignale für die Durchflußgeschwindigkeit des Erntegutes durch die Vorpreßwalzen liefert. Eine Steuereinrichtung berechnet aus den Abstandssignalen und den Geschwindigkeitssignalen den Erntegutdurchsatz. Weiterhin gehört zur Durchsatzmeßvorrichtung ein Kraftaufnehmer, der im Bereich der maximalen Grenzlage einer verstellbaren Vorpreßwalze an einem Anschlag angeordnet ist und der die von der Vorpreßwalze auf den Anschlag ausgeübten Kräfte erfaßt Die Steuereinrichtung bezieht die Kraftaufnehmersignale in die Ermittlung der Durchsatzwerte ein. Im mittleren Abstandsbereich zwischen den Vorpreßwalzen ist der Kraftaufnehmer nicht wirksam. Hier erfolgt die Ermittlung des Durchsatzes nur anhand der Abstands- und Geschwindigkeitssignale. Wenn jedoch die auslenkbare Vorpreßwalze mit zunehmendem Durchsatz ihre maximale Grenzlage erreicht, erfolgt eine weitere Steigerung des Durchsatzes durch weitere Kompression des Erntegutes. Im Bereich dieser Grenzlage tritt die Vorpreßwalze mit dem Kraftaufnehmer in Kontakt, dessen Federkraft gegen eine weitere Auslenkung der Vorpreßwalze wirkt und der dementsprechende Kraftaufnehmersignale abgibt. Die Kraftaufnehmersignale spiegeln die zusätzliche Verdichtungskraft im Bereich der maximalen Grenzlage wider und dienen der Korrektur der anhand der Abstands- und Geschwindigkeitssignale ermittelten Erntegutdurchsatzwerte. Im Auswurfkanal des Feldhäckslers ist noch eine Lichtschranke montiert, die den ausgeworfenen Erntegutfluß überwacht. Das Signal der Lichtschranke wird dann zur Bestimmung des Erntegutdurchsatzes herangezogen, wenn die Vorpreßwalzen einen minimalen Abstand zueinander einnehmen. In dem Fall wird ein konstanter minimaler Erntegutdurchsatz ausgegeben, sofern ein Erntegutfluß im Auswurfkanal erkannt wird. Liegt kein Erntegutfluß vor, wird der Erntegutdurchsatzwert gleich Null gesetzt.

Ein Nachteil dieser Durchsatzmeßvorrichtung ist, daß der empirisch eingesetzte konstante Wert für den minimalen Erntegutdurchsatz bei minimalem Abstand der Vorpreßwalzen das Gesamtergebnis sehr ungenau macht. Das wirkt sich insbesondere bei großen Häcksellängen negativ aus, weil da bis zu einem Drittel des maximalen Erntegutdurchsatzes die Vorpreßwalzen passiert, ohne daß sie sich ein kleines Stück ausheben. Ein weiterer Nachteil ist, daß auch die Kraftaufnehmersignale in der maximalen Grenzlage der Vorpreßwalzen sowie auch die Durchsatzwerte im Aushubbereich zwischen ihrer maximalen und minimalen Grenzlage zu ungenau sind, da alle diese Werte nur auf indirektem Weg ermittelt werden.

Schließlich ist mit der US 6,272,819 B1 eine Maschine zum Ernten von Zuckerrohr bekannt geworden, die die Stengel nach dem Abschneiden auf einem Förderband gerichtet ablegt, sie in dieser Position mittels einer Zerkleinerungseinrichtung in gleich lange Stücke schneidet und sie anschließend ganz wahllos auf einer Fördereinrichtung verteilt ablegt. Da es sich hierbei um lose abgelegtes Erntegut handelt, das keinen äußeren Einflüssen wie Druck und auch keinen Undefinierten Grenzstellungssituationen wie in der Verarbeitungseinrichtung eines Feldhäckslers ausgesetzt ist, handelt es sich im Vergleich zu den drei vorstehend beschriebenen Durchsatzmeßvorrichtung in Feldhäckslern um völlig unterschiedliche Meßverfahren in nicht miteinander vergleichbaren Umfeldern.

Deshalb liegt der Erfindung die Aufgabe zugrunde, einen Feldhäcksler mit einer Durchsatzmeßvorrichtung und einer Verarbeitungseinrichtung zu schaffen, wobei die Durchsatzmeßvorrichtung genaue Werte für den augenblicklichen Erntegutdurchsatz für minimale, mittlere und auch maximale Durchsätze liefert und die darüber hinaus noch ohne technische Hilfsmittel zur Messung für minimale und maximale Durchsätze auskommt, so daß sie demzufolge auch kostengünstig in der Herstellung ist.

Diese Aufgabe wird gemäß der Erfindung durch die Merkmale des Patentanspruchs 1 gelöst, wobei in den Unteransprüchen Merkmale aufgeführt sind, die diese Aufgabe in vorteilhafter Weise weiterentwickeln.

Durch die Messung des Hydraulikdruckes in der als Hochdruckleitung fungierenden Hydraulikleitung beim Vorwärtslauf der Einzugsorgane des Feldhäckslers werden die auf das Erntegut einwirkenden Kräfte zum Einzug in die Verarbeitungseinrichtung direkt aufgenommen. Es hat sich gezeigt, daß hier ein direkt proportionaler und somit ein linearer Zusammenhang zwischen diesen Kräften und dem Durchsatz besteht Das gilt sowohl für den Leerlaufbereich der Einzugsorgane als auch für deren Bereich mit maximalem Erntegutdurchsatz. Das heißt, daß dieser Zusammenhang auch für die Position einer aushebbaren Vorpreßwalze gegenüber einer feststehenden in der nicht ausgehobenen Position mit verschiedenen Durchsätzen und auch in der maximal ausgehobenen Position ebenfalls mit verschiedenen Durchsätzen besteht. Darüber hinaus ist der Durchsatz nur noch von der Einzugsgeschwindigkeit des Erntegutes abhängig, die im einfachsten Fall mit einem Drehzahlsensor an irgend einer Stelle des Antriebes der hydraulisch angetriebenen Einzugsorgane verfolgt werden kann. Die Werte für den Hydraulikdruck und die Einzugsgeschwindigkeit werden ständig an einen Mikroprozessor weitergeleitet, der daraus mittels einer geeigneten Software den aktuellen und/oder kumulativen Wert für den Durchsatz berechnet. In dieser Software können für den Fall der von der ausweichbaren Vorpreßwalze auf das Erntegut ausgeübten veränderlichen Kräfte noch verschiedene Faktoren abgelegt sein, die in der Berechnung des Durchsatzes berücksichtigt werden. Darüber hinaus bedarf es aber keiner weiteren Korrekturwerte und auch keiner Kalibrierung irgend welcher Berechnungswerte aufgrund sich verändernder Bedingungen und erntegutspezifischer Besonderheiten.

In einer zweckmäßigen Ausgestaltung der Erfindung nach den Merkmalen im Unteranspruch 2 kann der Drucksensor an irgend einer gut zugänglichen Stelle der als Hochdruckleitung fungierenden Hydraulikleitung beim Vorwärtslauf der Einzugsorgane angeordnet sein.

Mit dem gleichen Erfolg ist es nach den Merkmalen der Unteransprüche 3 und 4 denkbar, den Drucksensor entweder direkt an der Hydraulikpumpe oder am Hydromotor anzuschließen.

In einer bevorzugten Ausgestaltung der Erfindung nach den Merkmalen im Unteranspruch 5 ist der Hydraulikkreis zum Antrieb der Einzugsorgane als geschlossener Hydraulikkreis ausgebildet.

Die Erfindung ist aber nach den Merkmalen des Unteranspruchs 6 gleichermaßen vorteilhaft an einem offenen Hydraulikkreis zu verwirklichen.

In einer weiteren zweckmäßigen Ausgestaltung der Erfindung bietet es sich nach den Merkmalen im Unteranspruch 7 an, den Mikroprozessor mittels einer Signalleitung mit einer Anzeigeeinheit zu verbinden, um dem Bediener des Feldhäckslers stets den augenblicklichen und/oder den kumulativen Wert des Durchsatzes zu vermitteln.

Schließlich besteht eine bewährte Ausgestaltung der Erfindung nach den Merkmalen 8 im Unteranspruch darin, den Drehzahlsensor zur Messung der Drehzahl und Umrechnung auf die Einzugsgeschwindigkeit des Erntegutes entsprechend der Dimensionierung der eingesetzten Walzen der Einzugsorgane direkt am Häcksellängenschaltgetriebe anzuordnen.

Damit ergeben sich zusammengefaßt als Vorteile für einen derartigen Feldhäcksler mit einer Durchsatzmeßvorrichtung und einer Verarbeitungseinrichtung, daß damit sehr genaue Werte für den Erntegutdurchsatz für minimale, mittlere und auch maximale Durchsätze erzielt und darüber hinaus keine technische Hilfsmittel zur Messung der minimalen und maximalen Durchsätze notwendig sind und deshalb dieser Feldhäcksler auch kostengünstig in der Herstellung ist.

Die Erfindung soll nun anhand eines Ausführungsbeispieles näher erläutert werden, wobei die einzelnen Figuren zeigen:
- Fig. 1:: eine teilweise schematische Draufsicht auf einen Feldhäcksler mit einer Durchsatzmeßvorrichtung
- Fig. 2:: eine Seitenansicht auf das Vorderteil des Feldhäckslers von Fig. 1
- Fig. 3:: ein Schaltbild der Durchsatzmeßvorrichtung in Verbindung mit dem hydraulischen Antrieb der Zuführorgane des Feldhäckslers.

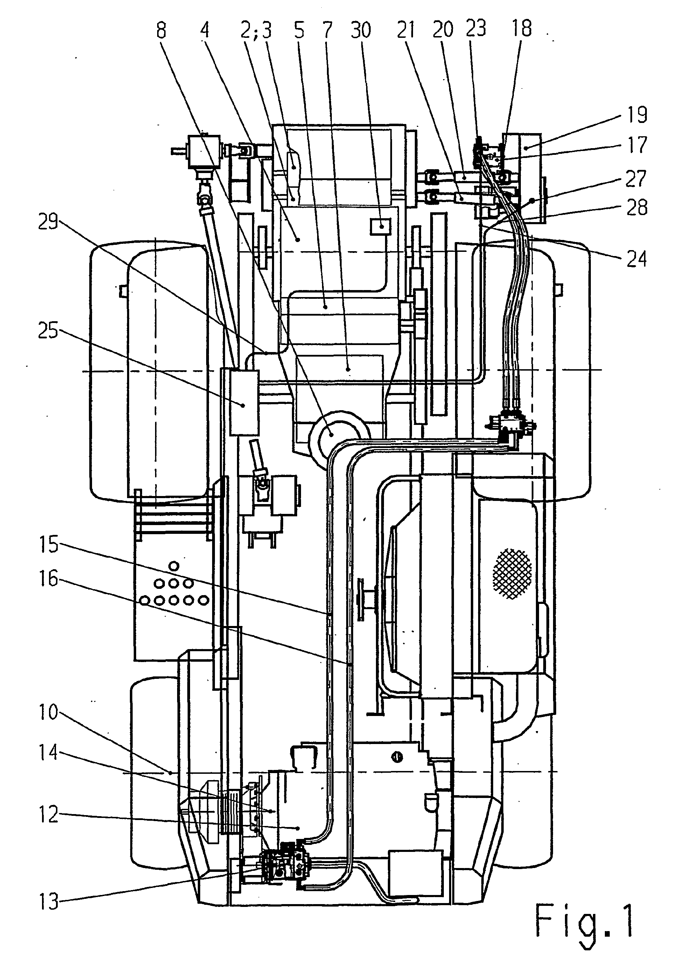

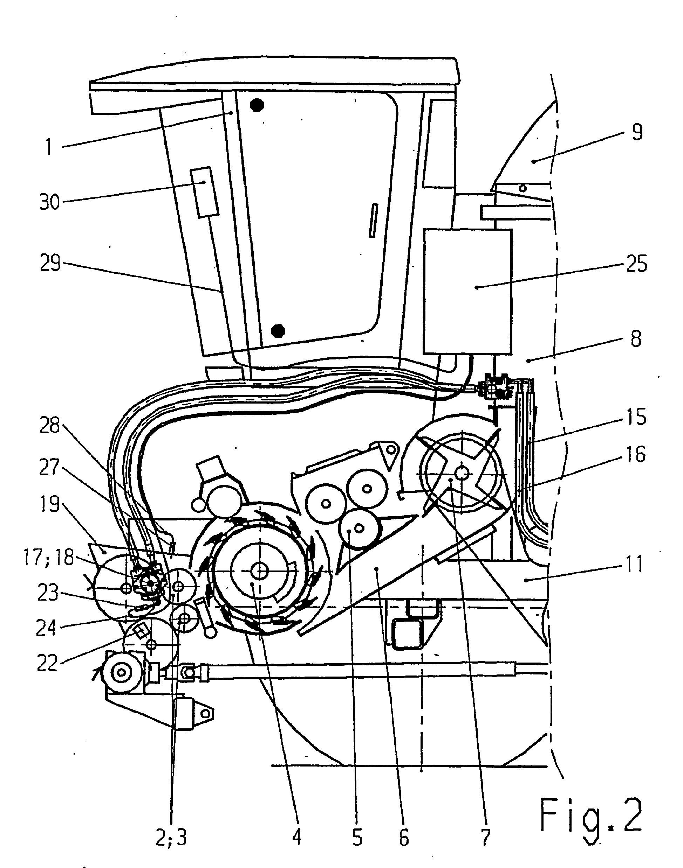

Die Grundmaschine des in den Figuren 1 und 2 dargestellten Feldhäckslers weist im Frontbereich unter der Fahrerkabine 1 ein Häckselaggregat auf, dessen Einzugsorgane 2 in Form von gegenläufig rotierenden Walzen 3 ausgebildet sind, die hydraulisch angetrieben werden. Im hinteren Teil des Häckselaggregates ist die Häckseltrommel 4 untergebracht In Flußrichtung des Häckselgutes durch den Feldhäcksler gesehen befindet sich hinter dem Häckselaggregat eine Aufbereitungseinrichtung 5 bzw. ein Graskanal 6, die entsprechend der Art des Häckselgutes wahlweise eingesetzt werden. Danach folgt das Wurfgebläse 7 zur Weiterleitung des Häckselgutes durch den Auswurfschacht 8 und den Auswurfbogen 9.

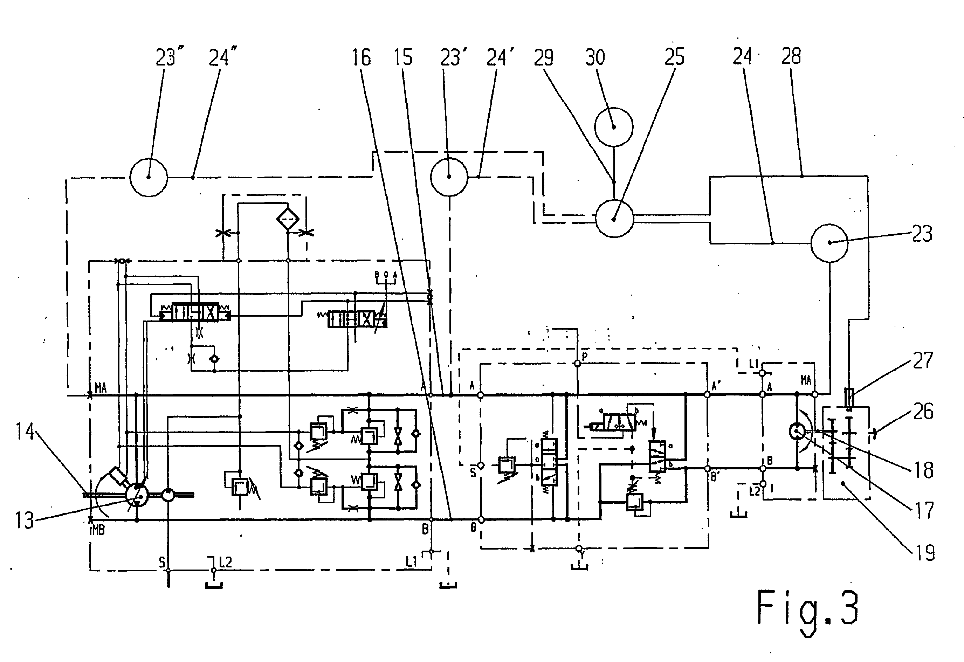

Im rückwärtigen Bereich des Feldhäckslers ist oberhalb seiner Hinterachse 10 auf dem Rahmen 11 der Antriebsmotor 12 angeordnet An sein Gehäuse ist eine Hydraulikpumpe 13 angeflanscht, die mit der Abtriebswelle 14 des Antriebsmotors 12 in antriebsmäßiger Verbindung steht Sie ist mit einer als Hochdruckleitung 15 und einer als Niederdruckleitung 16 fungierenden Hydraulikleitung in der Ausbildung als geschlossener Hydraulikkreislauf nach Figur 3 mit einem Hydromotor 17 verbunden, der auf die Eingangswelle 18 des Häcksellängenschaltgetriebes 19 aufgesteckt ist Von dessen einer Ausgangswelle führt eine Gelenkwelle 20 zum Antriebsritzel für die oberen Walzen 3 der Einzugsorgane 2 und eine weitere Gelenkwelle 21 mit entgegengesetzter Drehrichtung zum Antriebsritzel der unteren Walzen 3. In die vordere untere Walze 3 ist eine Fremdkörper- Ortungseinrichtung 22 zur Erzeugung eines Stoppsignals beim Erkennen eines Fremdkörpers eingebaut.

Im Ausführungsbeispiel nach den Figuren 1 bis 3 ist am Hydromotor 17 ein den Hydraulikdruck in der Hochdruckleitung 15 messender Drucksensor 23 angeordnet, dessen elektrische Ausgangsleitung 24 mit einem Mikroprozessor 25 verbunden ist. In Figur 3 sind weitere Möglichkeiten der Anordnung des Drucksensors 23';23" an irgend einer Stelle der Hochdruckleitung 15 oder auch an der Hydraulikpumpe 13 gezeigt, die in dem Fall durch gestrichelt gezeichnete elektrische Ausgangsleitungen 24';24" mit dem Mikroprozessor 25 in Verbindung stehen. Im Bereich der Ausgangswelle 26 des Häcksellängenschaltgetriebes 19 befindet sich ein Drehzahlsensor 27, dessen elektrisches Verbindungskabel 28 zum Mikroprozessor 25 geführt ist. Zur Anzeige des augenblicklichen und/oder kumulativen Durchsatzes ist der Mikroprozessor 25 über eine Signalleitung 29 mit einer Anzeigeeinheit 30 verbunden.

## Patentansprüche

1. Feldhäcksler mit einer Durchsatzmeßvorrichtung und einer Verarbeitungseinrichtung, der das Erntegut mit hydraulisch angetriebenen Einzugsorganen (2) zugeführt wird, in deren Antriebsstrang sich ein die Einzugsgeschwindigkeit des Erntegutes aufnehmender Drehzahlsensor (27) befindet, der über ein elektrisches Verbindungskabel (28) mit einem Mikroprozessor (25) verbunden ist, wobei:
a) an der als Hochdruckleitung (25) fungierenden Hydraulikleitung beim Vorwärtslauf der Einzugsorgane (2) ein den Hydraulikdruck messender Drucksensor (23;23';23") angeordnet ist, der über Ausgangsleitungen (24;24';24") mit dem Mikroprozessor (25) in Verbindung steht,
b) der Mikroprozessor (25) mittels einer geeigneten Software aus dem gemessenen Hydraulikdruck in der Hochdruckleitung (15) und der Einzugsgeschwindigkeit des Erntegutes den Wert des Durchsatzes für das Erntegut berechnet.

2. Feldhäcksler nach Anspruch 1, **dadurch gekennzeichnet, daß** der Drucksensor (23') an irgend einer Stelle der Hochdruckleitung (15) angeordnet ist.

3. Feldhäcksler nach Anspruch 1, **dadurch gekennzeichnet, daß** der Drucksensor (23") an der Hydraulikpumpe (13) angeschlossen ist.

4. Feldhäcksler nach Anspruch 1, **dadurch gekennzeichnet, daß** der Drucksensor (23) am Hydromotor (15) angeschlossen ist.

5. Feldhäcksler nach den Ansprüchen 1 bis 4, **dadurch gekennzeichnet, daß** der Hydraulikkreis zum Antrieb der Einzugsorgane (2) als geschlossener Hydraulikkreis ausgebildet ist.

6. Feldhäcksler nach den Ansprüchen 1 bis 4, **dadurch gekennzeichnet, daß** der Hydraulikkreis zum Antrieb der Einzugsorgane (2) als offener Hydraulikkreis ausgebildet ist.

7. Feldhäcksler nach einem oder mehreren der vorstehenden Ansprüche, **dadurch gekennzeichnet, daß** der Mikroprozessor (25) über eine Signalleitung (29) mit einer Anzeigeeinheit (30) verbunden ist.

8. Feldhäcksler nach Anspruch 1, **dadurch gekennzeichnet, daß** der Drehzahlsensor (27) an der Ausgangswelle (26) des Häcksellängenschaltgetriebes (19) angeordnet ist.

## Claims

1. A forage harvester including a flow measuring device and a processing device, to which the crop is fed by means of hydraulically driven feed members (2), the driveline of which including a rotation speed sensor (27) for measuring the feed rate of the crop, which sensor is connected by an electric connecting cable (28) to a microprocessor (25), wherein:
a) a pressure sensor (23, 23', 23") for measuring the hydraulic pressure is installed in the hydraulic line operating as a high-pressure line (25) when the feed members (2) are operating in a forward direction, which sensor is connected to the microprocessor (25) by output lines (24, 24', 24"); and
b) by means of suitable software, the microprocessor (25) calculates the crop flow value from the hydraulic pressure measured in the high-pressure line (15) and the feed rate of the crop.

2. A forage harvester according to claim 1, **characterized in that** the pressure sensor (23') is installed anywhere in the high-pressure line (15).

3. A forage harvester according to claim 1, **characterized in that** the pressure sensor (23") is connected to the hydraulic pump (13).

4. A forage harvester according to claim 1, **characterized in that** the pressure sensor (23) is connected to the hydraulic motor (15).

5. A forage harvester according to claims 1 to 4, **characterized in that** the hydraulic circuit for driving the feed members (2) is a closed hydraulic circuit.

6. A forage harvester according to claims 1 to 4, **characterized in that** the hydraulic circuit for driving the feed members (2) is an open hydraulic circuit.

7. A forage harvester according to any of the preceding claims, **characterized in that** the microprocessor (25) is connected to a display unit (30) via a signal line (29).

8. A forage harvester according to claim 1, **characterized in that** the rotation speed sensor (27) is installed on the output shaft (26) of the cutting length control gearbox (19).

## Revendications

1. Ensileuse comportant un dispositif de mesure de débit et un dispositif de traitement, dans laquelle le produit récolté est acheminé au moyen d'organes d'alimentation (2) à entraînement hydraulique, dans la ligne de transmission desquels se trouve un capteur de vitesse de rotation (27) mesurant la vitesse d'alimentation du produit récolté, qui est connecté par un câble de jonction électrique (28) à un microprocesseur (25), moyennant quoi:
a) un capteur de pression (23, 23', 23") mesurant la pression hydraulique est implanté dans la conduite hydraulique fonctionnant comme une conduite haute pression (25), en marche avant des organes d'alimentation (2), lequel capteur est relié au microprocesseur (25) par des lignes de sortie (24, 24', 24"), et
b) le microprocesseur (25) calcule au moyen d'un logiciel approprié la valeur du débit du produit récolté à partir de la pression hydraulique mesurée dans la conduite haute pression (15) et la vitesse d'alimentation du produit récolté.

2. Ensileuse selon la revendication 1, **caractérisée en ce que** le capteur de pression (23') est implanté à n'importe quel endroit dans la conduite haute pression (15).

3. Ensileuse selon la revendication 1, **caractérisée en ce que** le capteur de pression (23") est raccordé au niveau de la pompe hydraulique (13).

4. Ensileuse selon la revendication 1, **caractérisée en ce que** le capteur de pression (23) est raccordé au niveau du moteur hydraulique (15).

5. Ensileuse selon les revendications 1 à 4, **caractérisée en ce que** le circuit hydraulique pour actionner les organes d'alimentation (2) est réalisé sous forme d'un circuit hydraulique fermé.

6. Ensileuse selon les revendications 1 à 4, **caractérisée en ce que** le circuit hydraulique pour actionner les organes d'alimentation (2) est réalisé sous forme d'un circuit hydraulique ouvert.

7. Ensileuse selon l'une quelconque des revendications précédentes, **caractérisée en ce que** le microprocesseur (25) est connecté à une unité d'affichage (30) par l'intermédiaire d'une ligne de signal (29).

8. Ensileuse selon la revendication 1, **caractérisée en ce que** le capteur de vitesse de rotation (27) est implanté sur l'arbre de sortie (26) de la transmission réglant la longueur de coupe (19).
